# FASCICULE DE BREVET EUROPEEN

(11) **EP 3 501 991 B1**
(45) Date de publication et mention de la délivrance du brevet: **13.10.2021**
(21) Numéro de dépôt: 18214213.3
(22) Date de dépôt: 19.12.2018
(51) Int. Cl.: B64D 33/02

(54) **PARTIE ANTÉRIEURE DE NACELLE D'UN ENSEMBLE PROPULSIF COMPORTANT UN CADRE DE RIGIDIFICATION INCLINÉ**
FRONTTEIL EINER GONDEL EINER ANTRIEBSGRUPPE, DIE EINEN GENEIGTEN AUSSTEIFUNGSRAHMEN UMFASST
REAR PART FOR NACELLE OF A PROPULSION ASSEMBLY COMPRISING A TILTED FRAME FOR STIFFENING

(30) Priorité: 21.12.2017 FR 1762720
(43) Date de publication de la demande: 26.06.2019
(73) Titulaire: Airbus Operations, 31060 Toulouse (FR)
(72) Inventeur: VINCHES, Frédéric, 31330 LARRA (FR); BOURHIS, Arnaud, 31830 PLAISANCE DU TOUCH (FR); SENTIER, Julien, 31770 COLOMIERS (FR); BRETON, Clément, 31200 TOULOUSE (FR)
(74) Mandataire: Santarelli

(56) Documents cités:
- EP-A1- 1 582 702
- EP-A1- 3 103 723
- WO-A2-2010/012899
- DE-A1-102011 103 163
- FR-A1- 3 055 922
- US-A1- 2017 096 238
- US-A1- 2017 233 090

## Description

La présente invention concerne les ensembles propulsifs d'aéronef et plus particulièrement les nacelles des ensembles propulsifs d'aéronef.

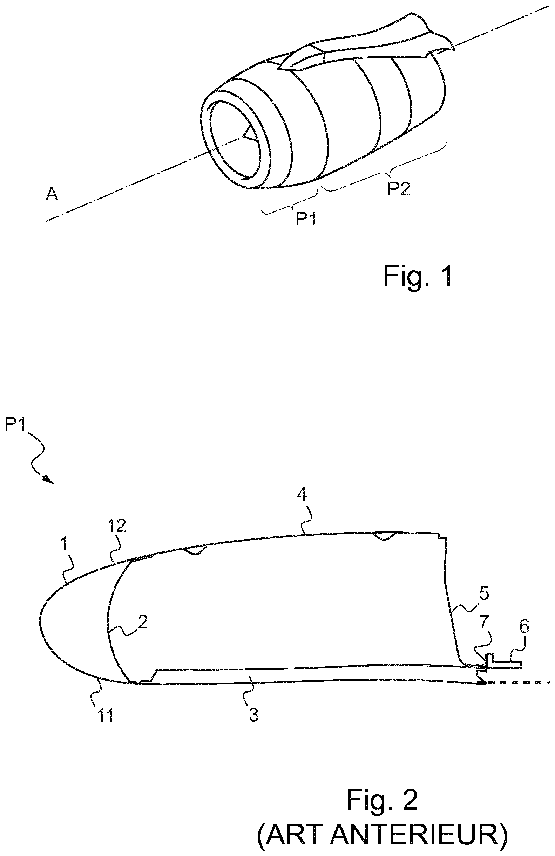

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1.

La nacelle comporte classiquement une partie antérieure P1 formant entrée d'air.

La partie antérieure P1 a pour rôle de capter l'air de façon à assurer un écoulement régulier vers la soufflante.

La nacelle comporte par ailleurs une partie principale P2, constituant le reste de ladite nacelle.

L'ensemble propulsif s'étend autour d'un axe appelé par la suite axe longitudinal A.

Une structure classique de partie antérieure de nacelle d'ensemble propulsif d'aéronef, telle que connue dans l'état de la technique, est décrite en référence à la figure 2.

La partie antérieure P1 de la nacelle comprend une lèvre d'entrée d'air 1, pouvant être annulaire ou sensiblement annulaire et qui est disposée à son extrémité avant.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air rentre par l'avant de l'ensemble propulsif, c'est-à-dire par la partie antérieure P1 de la nacelle et ressort (après qu'une partie de l'air a servie en tant que comburant) par l'arrière de l'ensemble propulsif, c'est-à-dire par l'extrémité arrière de la partie principale P2.

Dans la structure classique d'une partie antérieure P1 de l'ensemble propulsif, un cadre avant 2 est disposé à l'arrière de la lèvre d'entrée d'air 1. Une structure interne 3 comportant un panneau insonorisant, prolonge vers l'arrière d'une surface intérieure 11 la lèvre d'entrée d'air 1.

Un panneau externe 4 prolonge vers l'arrière une surface externe 12 de la lèvre d'entrée d'air 1.

Un cadre de rigidification 5, également appelé cadre arrière est par ailleurs disposé à une extrémité arrière de la partie antérieure P1 de nacelle et relie le panneau externe 4 à la structure interne 3.

Le cadre de rigidification 5 définit ainsi la limite entre la partie antérieure P1 et la partie principale P2 de la nacelle.

Une bride moteur 6, représentée à la figure 2 bien que ne faisant pas partie de la partie antérieure P1 de la nacelle, permet de lier le cadre de rigidification 5 au moteur du groupe propulsif, c'est-à-dire à l'ensemble comportant la soufflante et la turbomachine, et en particulier de lier la partie antérieure P1 de la nacelle à un compartiment de soufflante. La bride moteur 6 est en particulier liée à une bride arrière 7 du cadre de rigidification 5.

Généralement, le cadre avant 2 et le cadre de rigidification 5 sont tous les deux disposés selon une direction perpendiculaire à l'axe longitudinal de l'ensemble propulsif. L'axe longitudinal peut être ainsi confondu avec un axe de révolution du cadre avant ou du cadre de rigidification 5.

Lors des différentes phases de vol d'un aéronef, des événements impactant l'ensemble propulsif peuvent se produire.

Il arrive par exemple que des oiseaux ou que des objets extérieurs entrent en collision avec l'aéronef et notamment avec l'un de ses ensembles propulsifs. Ces collisions, et notamment les collisions aviaires peuvent endommager les ensembles propulsifs.

Dans l'état de la technique, en cas de collision d'un oiseau ou d'un objet avec la nacelle de l'ensemble propulsif, la structure précédemment décrite subit cette collision. La structure est alors dimensionnée pour encaisser des impacts importants.

Lors d'un impact, par exemple celui d'une collision aviaire au niveau de la lèvre d'entrée d'air 1 de la nacelle N, l'oiseau heurte le cadre avant 2 puis, s'il traverse le cadre avant 2 en cas d'impact frontal violent, le cadre de rigidification 5.

Ainsi, le cadre avant 2 et le cadre de rigidification 5 sont dimensionnés pour absorber une énergie importante. Un tel dimensionnement a des conséquences négatives sur le poids et le coût de fabrication des cadres.

En outre, avec les structures de partie antérieure de nacelle connues dans l'état de la technique, l'objet ou l'oiseau entré en collision avec la lèvre d'entrée d'air 1 peut être piégé et rester bloqué dans la partie antérieure de la nacelle, ce qui peut s'avérer gênant.

Le risque d'impact avec la lèvre d'entrée d'air et le risque de blocage d'un objet dans la partie antérieure P1 de l'ensemble propulsif sont majorés avec les ensembles propulsifs à fort taux de dilution.

Le document DE 10 2011 103163 A1 divulgue une partie antérieure de nacelle d'un ensemble propulsif d'aéronef selon le préambule de la revendication 1.

La présente invention a pour but de résoudre au moins l'un des inconvénients précités. Pour cela, l'invention propose une partie antérieure de nacelle d'un ensemble propulsif d'aéronef présentant une structure optimisée.

Ainsi, l'invention porte sur une partie antérieure de nacelle d'un ensemble propulsif d'aéronef, la partie antérieure ayant une extrémité avant permettant l'entrée d'air et une extrémité arrière, la partie antérieure comprenant:
- une lèvre d'entrée d'air disposée à l'extrémité avant,
- une structure interne prolongeant une surface intérieure de la lèvre d'entrée d'air,
- un panneau externe prolongeant une surface externe de la lèvre d'entrée d'air,
- un cadre de rigidification annulaire autour d'un axe de révolution, le cadre de rigidification étant disposé à l'extrémité arrière de la partie antérieure et reliant le panneau externe à la structure interne, le cadre de rigidification comprenant un bord périphérique interne lié à la structure interne et un bord périphérique externe lié directement ou par un anneau d'interface au panneau externe.

Selon l'invention, le cadre de rigidification présente une inclinaison par rapport à l'axe de révolution du cadre de rigidification, de sorte que le cadre de rigidification présente une pente orientée vers l'extrémité avant de la partie antérieure de nacelle, ledit cadre de rigidification étant configuré pour dévier hors de la nacelle de l'ensemble propulsif un objet entrant par l'extrémité avant de la partie antérieure et percutant ledit cadre de rigidification, et le bord périphérique externe ou l'anneau d'interface ne s'étend pas dans la continuité du cadre de rigidification de sorte à faciliter l'évacuation hors de la nacelle d'un objet percutant le cadre de rigidification.

L'inclinaison du cadre de rigidification lui permet de résister aux impacts d'objets sans casser tout en permettant de dévier l'objet percutant le cadre de rigidification vers l'extérieur de la nacelle. En effet, lorsqu'un objet entre dans la partie antérieure de la nacelle en traversant la lèvre d'entrée d'air, l'objet percute le cadre de rigidification puis grâce à l'orientation de la pente, il est dévié vers l'extérieur de la nacelle.

De plus, l'inclinaison du cadre de rigidification permet de réduire la composante longitudinale de l'impact de l'objet contre le cadre de rigidification.

Enfin, la structure de la partie antérieure de la nacelle peut être simplifiée puisqu'il est possible dans de nombreux cas de s'affranchir de l'utilisation de cadre avant en outre du cadre de rigidification comme cela est le cas dans l'art antérieur.

La partie antérieure peut comprendre une bride arrière comportant une extrémité avant et une extrémité arrière. L'extrémité avant est fixée au bord périphérique interne du cadre de rigidification, et l'extrémité arrière est adaptée à être fixée à une bride moteur du compartiment de soufflante.

La bride arrière peut être déformable sous l'effet d'un impact de même direction que l'axe de révolution du cadre de rigidification.

Le partie antérieure d'une nacelle peut comprendre une pièce de fixation en titane ou alliage de titane assurant la liaison entre l'extrémité avant de la bride arrière et le bord périphérique interne du cadre de rigidification.

L'inclinaison du cadre de rigidification par rapport à son axe de révolution peut être comprise entre 10° et 45° et de préférence entre 20° et 40°, notamment 30°.

Le cadre de rigidification peut être réalisé en matériau composite.

Le cadre de rigidification peut présenter une forme sensiblement bombée.

La partie antérieure peut être dépourvue de cadre avant.

Le cadre de rigidification et l'anneau d'interface peuvent former un premier angle supérieur ou égal à 120° et inférieur à 180°.

Le premier angle peut être compris entre 120° et 170°.

L'anneau d'interface peut présenter une largeur comprise entre 20 et 150 millimètres et de préférence comprise entre 60 et 80 millimètres, notamment 70 millimètres.

L'anneau d'interface peut présenter une épaisseur comprise entre 1 et 3 millimètres.

L'anneau d'interface peut être réalisé en métal, notamment en aluminium, alliage d'aluminium ou en titane.

L'invention porte également sur un ensemble propulsif d'aéronef comportant une nacelle, la nacelle comportant une partie antérieure telle que précédemment décrite.

D'autres particularités et avantages de l'invention apparaîtront encore dans la description ci-après.

Aux dessins annexés, donnés à titre d'exemples non limitatifs :
- la figure 1 représente selon une vue schématique en trois dimensions un ensemble propulsif d'aéronef ;
- la figure 2 représente selon une vue de principe en coupe une partie antérieure d'une nacelle d'ensemble propulsif d'aéronef conforme à l'art antérieur
- la figure 3 représente, selon une vue identique à celle de la figure 2, la partie antérieure d'une nacelle d'ensemble propulsif selon un mode de réalisation de l'invention ;
- la figure 4 représente selon une vue tridimensionnelle partielle en coupe une partie antérieure d'ensemble propulsif conforme au mode de réalisation illustré à la figure 3 ; et
- la figure 5 représente selon une vue identique à celles des figures 2 et 3, la partie antérieure d'une nacelle d'ensemble propulsif selon un autre mode de réalisation de l'invention.

Les figures 1 et 2, présentant respectivement des généralités sur les ensembles propulsifs d'aéronef et une configuration de partie antérieure de nacelle conforme à l'état de la technique ont été décrites ci-avant en préambule du présent document.

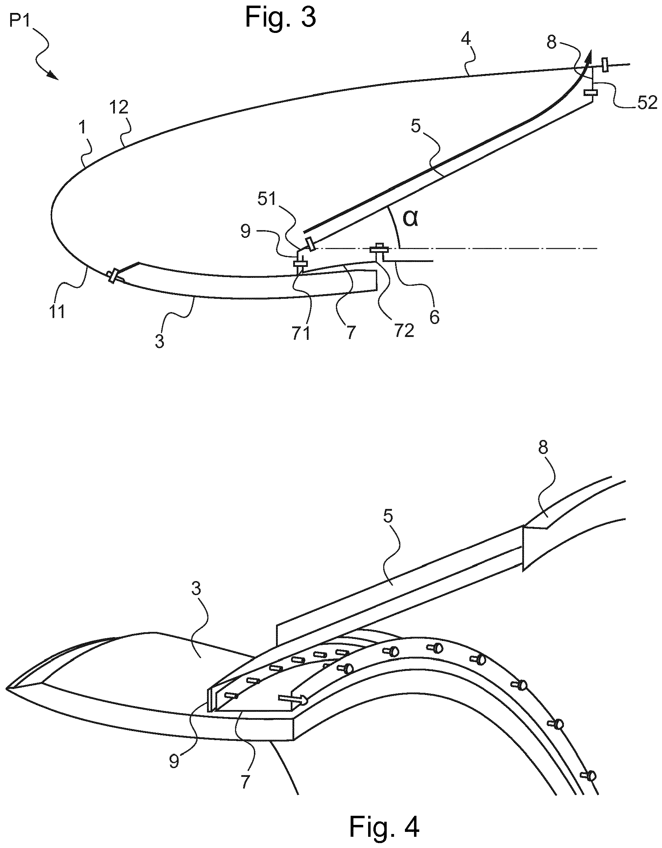

Les figures 3 et 4 représentent une partie antérieure P1 d'une nacelle d'ensemble propulsif selon un mode de réalisation conforme à l'invention.

La partie antérieure P1 est une structure sensiblement de révolution autour de l'axe longitudinal A de l'ensemble propulsif qu'elle est destinée à équiper. La figure 3 ne représente qu'une section de cette structure sensiblement de révolution.

La configuration présentée correspond en particulier à une partie antérieure de nacelle de moteur de type UHBR. Un moteur UHBR présente un taux de dilution (ratio massique entre le flux secondaire et le flux primaire) supérieur ou égal à quinze. Un tel moteur présente une nacelle de grande dimension, en particulier de plus grand diamètre que les diamètres des ensembles propulsifs employés à ce jour sur les aéronefs commerciaux.

La présente invention est particulièrement adaptée aux ensembles propulsifs présentant de telles caractéristiques géométriques.

La partie antérieure P1 de nacelle d'ensemble propulsif d'aéronef représentée à la figure 3 comporte une lèvre d'entrée d'air 1. Bien que représentée de manière schématique par un simple trait sur la figure 3, la lèvre d'entré d'air 1 est une pièce physique qui définit le bord d'attaque de la partie antérieure P1 de nacelle, et donc le bord d'attaque du carénage aérodynamique formé par la nacelle une fois celle-ci constituée avec ladite partie antérieure P1.

La lèvre d'entrée d'air 1 forme l'extrémité avant de la partie antérieure P1 de nacelle. Elle présente une forme fermée, sensiblement annulaire, mais n'est pas nécessairement parfaitement circulaire (de révolution).

Selon le mode de réalisation décrit, la lèvre d'entrée d'air 1 présente une surface interne 11 et une surface externe 12.

La surface interne 11 de la lèvre d'entrée d'air 1 est prolongée par une structure interne 3. La structure interne 3 comporte en particulier un panneau qui forme la surface aérodynamique interne de la partie antérieure P1 de nacelle, canalisant le flux d'air entrant dans la nacelle. La structure interne 3 a un rôle acoustique important, afin de limiter le bruit émis par l'ensemble propulsif. La structure interne 3 peut en particulier comporter un panneau insonorisant, connu dans l'état de la technique, ayant une configuration permettant d'éviter la transmission des ondes acoustiques ou d'en favoriser l'absorption.

La surface extérieure 12 de la lèvre d'entrée d'air 1 est prolongée par un panneau externe 4. Le panneau externe 4 forme la surface aérodynamique extérieure de la partie antérieure P1 de nacelle. Lorsque la nacelle est constituée, le panneau externe 4 est lui-même prolongé au niveau de la partie principale P2 afin de former la surface aérodynamique externe de la nacelle, qui est notamment configurée pour limiter la trainée aérodynamique.

Comparativement à la structure connue dans l'état de la technique et décrite en référence à la figure 2, la structure de la partie antérieure P1 de la figure 3, correspondant à un exemple de mode de réalisation de l'invention, est dépourvue de cadre avant.

La partie antérieure P1 comporte un cadre de rigidification 5 disposé à l'extrémité arrière de la partie antérieure P1. Le cadre de rigidification constitue un élément structurel important de la partie antérieure de nacelle.

Le cadre de rigidification 5 a de nombreuses fonctions, liées à la résistance mécanique de ladite partie antérieure de nacelle.

En particulier, le cadre de rigidification 5 est destiné à être lié au moteur de l'ensemble propulsif. Par moteur on entend de façon générale les moyens de propulsion qui sont compris dans la nacelle une fois celle-ci constituée. Le moteur comprend généralement une turbomachine et une soufflante entrainée par la turbomachine. Le cadre de rigidification 5 peut en particulier être lié à un compartiment de soufflante, c'est-à-dire à un carter de la soufflante.

Le cadre de rigidification 5 a un rôle de liaison entre les parois de la partie antérieure de nacelle, c'est-à-dire de liaison entre le panneau externe 4 et la structure interne 3. Le cadre de rigidification 5 comprend un bord périphérique interne 51 lié à la structure interne 3 et un bord périphérique externe 52 lié au panneau externe 4. Ces liaisons peuvent être réalisées par rivetage.

Selon le mode de réalisation illustré, le bord périphérique externe 52 du cadre de rigidification 5 est lié au panneau externe 4 par un anneau d'interface 8.

L'anneau d'interface 8 possède un rôle d'amortisseur lors de la déviation d'un objet ayant percuté le cadre de rigidification 5. On entend par amortisseur un élément adapté à absorber, par exemple par déformation, tout ou partie de l'énergie de l'impact.

L'anneau d'interface 8 présente une forme de couronne ayant un périmètre extérieur et un périmètre intérieur. L'anneau d'interface 8 est sensiblement plat. En d'autres termes, l'anneau d'interface 8 présente une épaisseur sensiblement constante.

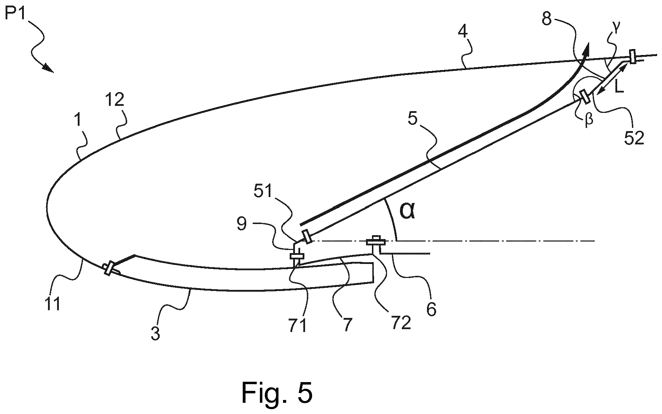

Selon le mode de réalisation représenté aux figures 3 et 4, l'anneau d'interface 8 s'étend sensiblement perpendiculairement à l'axe de révolution A. Dans l'exemple de réalisation de la figure 5, l'anneau d'interface 8 présente une inclinaison différente par rapport à l'axe de révolution A.

Comme illustré à la figure 5, le cadre de rigidification 5 et l'anneau d'interface 8 forment un premier angle β. Le premier angle β peut être compris entre 120° et 180°. L'anneau d'interface 8 et le panneau externe 4 forment un deuxième angle γ. Le deuxième angle γ peut être compris entre 20° et 40°.

L'anneau d'interface 8 ne s'étend pas dans la continuité du cadre de rigidification 5. En d'autres termes, le premier angle β est inférieur à 180°, et par exemple compris entre 120° et 170°.

Une telle disposition de l'anneau d'interface 8 et en particulier une inclinaison telle que le premier angle β soit supérieur ou égal à 120° et inférieur à 180° facilite l'évacuation hors de la nacelle d'un objet percutant le cadre de rigidification 5.

L'anneau d'interface 8 est dimensionné de sorte à assurer le rôle d'amortisseur. L'anneau d'interface 8 peut présenter une largeur L comprise entre 20 et 150 millimètres. De préférence, l'anneau d'interface 8 a une largeur L comprise entre 60 et 80 millimètres, notamment 70 millimètres. L'anneau d'interface 8 peut présenter une épaisseur comprise entre 1 et 3 millimètres.

On entend par largeur de l'anneau d'interface la distance entre le périmètre extérieur et le périmètre intérieur.

L'anneau d'interface 8 peut être réalisé en métal, par exemple en aluminium, alliage d'aluminium ou en titane. L'utilisation de tels métaux permet d'obtenir un anneau d'interface léger et résistant aux chocs.

La liaison de la partie antérieure P1 de nacelle avec le moteur est assurée via deux brides liées l'une à l'autre. Une bride arrière 7 permet la liaison entre le cadre de rigidification 5 et une bride moteur 6 (qui ne fait pas partie de la partie antérieure P1 de nacelle), qui est fixée au moteur de l'ensemble propulsif.

Comme cela est visible à la figure 3, la bride arrière 7 comprend une extrémité avant 71 et une extrémité arrière 72. L'extrémité avant 71 est fixée au bord périphérique interne 51 du cadre de rigidification 5 et à la structure interne 3. L'extrémité arrière 72 est fixée à la bride moteur 6 du compartiment de soufflante.

Les liaisons précitées peuvent être réalisées par rivets.

En cas d'impact direct par un objet, la bride arrière 7 permet d'absorber l'énergie de l'objet et de protéger la bride moteur 6. La bride arrière 7 joue notamment le rôle d'amortisseur lors d'un impact direct avec un objet, c'est-à-dire lors d'un impact de même direction que l'axe longitudinal A de l'ensemble propulsif.

Dans les exemples de réalisation décrits, la bride arrière 7 présente une section en U. Mais bien entendu, la bride arrière 7 peut présenter toute autre forme adaptée, ou des dimensions différentes.

De préférence, la bride arrière 7 est en matériau ductile, ce qui lui permet d'avoir une déformation plastique sans rupture.

Selon les exemples de réalisation illustrés, une pièce de fixation 9 permet la liaison entre le cadre de rigidification 5 et la bride arrière 7.

La pièce de fixation 9 peut être en titane afin d'éviter la corrosion entre le composite du cadre de rigidification 5 et l'aluminium de la bride arrière 7. Le titane présente notamment une bonne résistance à la corrosion en plus des propriétés mécaniques, notamment de ductilité, adaptées à lui permettre d'absorber l'énergie d'un impact.

La pièce de fixation 9 peut présenter diverses formes. La pièce de fixation 9 peut notamment être conformée de sorte à en favoriser la déformation sans rupture, afin d'augmenter l'énergie qu'elle peut absorber en cas d'impact.

Comme cela est visible aux figures 3 et 4, le cadre de rigidification 5 présente une inclinaison par rapport à l'axe longitudinal A. Le cadre de rigidification 5 est incliné de sorte que le cadre de rigidification présente une pente orientée vers l'avant de la partie antérieure de nacelle. Typiquement, la distance séparant le bord périphérique interne 51 de la lèvre d'entrée d'air 1 est plus petite que la distance séparant le bord périphérique externe 52 de la lèvre d'entrée d'air 1. Un angle d'inclinaison α est illustré à la figure 3.

L'angle d'inclinaison α est ici tracé entre un axe parallèle à l'axe longitudinal A et le cadre de rigidification 5. L'angle d'inclinaison α formé entre le cadre de rigidification et l'axe longitudinal A (ou un axe parallèle à l'axe longitudinal A), mesuré vers l'arrière de la partie antérieure de nacelle tel que représenté à la figure 3, est ainsi un angle aigu.

Selon une plage préférentielle, l'inclinaison du cadre de rigidification 5 par rapport à l'axe longitudinal A, c'est-à-dire la valeur de l'angle d'inclinaison a, est comprise entre 10° et 45°. En particulier, l'inclinaison du cadre de rigidification 5 par rapport à l'axe longitudinal A peut être comprise entre 20° et 40°.

L'angle d'inclinaison α peut notamment être de l'ordre de 30° ou égal à 30°.

L'inclinaison du cadre de rigidification 5 permet, lors d'une collision, de dévier l'objet ayant percuté le cadre de rigidification 5 vers l'extérieur de la nacelle.

Une flèche représentée à la figure 3 illustre la trajectoire que suivrait un objet s'il heurtait le cadre de rigidification 5. Comme cela est visible sur la figure, l'objet percute le cadre de rigidification 5, suit la direction du cadre de rigidification 5 incliné pour être ensuite dévié vers l'extérieur de la nacelle.

L'inclinaison du cadre de rigidification 5 permet donc d'éviter qu'un objet ne s'introduise dans la partie moteur et ne reste piégé dans la nacelle. Les inconvénients énoncés plus haut sont ainsi écartés.

De plus, lors d'un impact d'objet contre le cadre de rigidification, une partie de l'énergie de l'objet est absorbée par le cadre de rigidification 5. L'inclinaison du cadre de rigidification permet de réduire l'énergie absorbée suite à une collision comparativement à l'art antérieur où le cadre de rigidification est perpendiculaire à l'axe longitudinal A.

Toutefois, bien que l'énergie absorbée soit réduite grâce à l'inclinaison du cadre de rigidification 5, ce dernier est configuré de sorte à avoir une grande rigidité permettant de dévier l'objet sans casser, mais également préférentiellement de sorte à résister à des contraintes différentes de celles des impacts d'objets. En effet, le cadre de rigidification 5 doit par exemple supporter les efforts issus de la partie principale P2 à laquelle il est lié mais également pouvoir résister, autant que possible, à une perte de pale ou encore à un grand différentiel de pression en cas d'éclatement de conduites présentes dans la nacelle équipée du cadre de rigidification 5.

Pour ce faire, le cadre de rigidification 5 peut être réalisé en un matériau composite. Par exemple, le cadre de rigidification 5 peut être réalisé en un matériau thermoplastique ayant une grande rigidité.

Selon un exemple de procédé de réalisation, le cadre de rigidification 5 peut être réalisé à partir d'une plaque lisse. Plusieurs portions sont ensuite fabriquées par thermo-moulage à partir de la plaque lisse grâce à un outillage bombé. Les portions sont éclissées les unes aux autres. Du thermoplastique est enfin sur-injecté le long de la périphérie de l'extrémité de la plaque lisse.

La sur-injection de thermoplastique permet au cadre de rigidification 5 de supporter le matage et d'obtenir une côte finale sans reprise d'usinage.

Le procédé industriel décrit ci-dessus permet en outre d'avoir une forte cadence de fabrication.

De plus, afin d'améliorer la déviation de l'objet, le cadre de rigidification peut présenter une forme sensiblement bombée.

Bien entendu, la présente invention n'est pas limitée aux modes de réalisation décrits ci-avant.

Les évènements cités dans la description ci-dessus ne constituent pas l'unique risque d'endommagement pour les ensembles propulsifs. En effet, d'autres risques notamment liés à l'environnement externe doivent être pris en compte lors du dimensionnement des cadres de la partie amont de la nacelle.

A titre d'exemple, le givrage constitue un risque d'endommagement pour la soufflante et le turboréacteur. Ainsi, lorsque le dégivrage de l'ensemble propulsif n'est pas effectué électriquement, la lèvre d'entré d'air 1 peut comporter un système de dégivrage.

Par ailleurs, l'anneau d'interface 8 peut présenter une forme ainsi que des dimensions différentes. A titre d'exemple, l'anneau d'interface 8 peut être plus long qu'il n'est représenté, afin d'être plus flexible et ainsi améliorer les propriétés d'amortissement d'impact.

Alternativement, le bord périphérique externe 52 du cadre de rigidification 5 peut être lié directement au panneau externe 4, sans l'utilisation d'anneau d'interface 8.

La partie antérieure P1 de nacelle peut comprendre un cadre avant lié à la lèvre d'entrée d'air 1.

L'invention propose ainsi une structure de partie antérieure de nacelle d'ensemble propulsif d'aéronef optimisée pour les nacelles de grande dimension, en particulier de grand diamètre. Cela concerne notamment les nacelles pour moteur à très fort taux de dilution.

L'inclinaison du cadre de rigidification lui permet de résister aux impacts d'objet sans casser tout en permettant de dévier l'objet vers l'extérieur de la nacelle.

Le cadre de rigidification est configuré pour avoir des caractéristiques mécaniques élevées, notamment en matière de résistance aux contraintes externes et internes à la nacelle.

Dans le cadre d'un ensemble propulsif de type UHBR, ou d'un ensemble propulsif à dégivrage électrique (de type UHBR ou non), cela permet de s'affranchir du cadre avant et ainsi de réduire la complexité de la structure de l'entrée d'air formée par la partie antérieure de nacelle. La potentielle suppression du cadre avant permet de fait de supprimer les fixations du cadre avant à la lèvre d'entrée d'air. Il est ainsi possible réduire les perturbations aérodynamiques pouvant être causées par la présence de ces fixations qui se trouvent proches de l'extrémité avant de la nacelle.

Si toutefois la partie antérieure du cadre avant comprend un cadre avant notamment pour la protection contre le givrage, la structure de la partie antérieure de nacelle est tout de même simplifiée. En effet, dans ce mode de réalisation, le cadre avant est essentiellement dimensionné pour assurer la fonction dégivrage puisque le cadre de rigidification est configuré pour résister aux impacts et autres sollicitations mécaniques. Cela réduit considérablement le poids et la complexité du cadre avant, et en conséquence de la partie antérieure de nacelle.

## Revendications

1. Partie antérieure (P1) de nacelle d'un ensemble propulsif d'aéronef, ladite partie antérieure (P1) ayant une extrémité avant permettant l'entrée d'air et une extrémité arrière, ladite partie antérieure (P1) comprenant :
- une lèvre d'entrée d'air (1) disposée à ladite extrémité avant,
- une structure interne (3) prolongeant une surface intérieure (11) de la lèvre (1) d'entrée d'air,
- un panneau externe (4) prolongeant une surface externe (12) de la lèvre (1) d'entrée d'air,
- un cadre de rigidification (5) annulaire autour d'un axe de révolution (A), ledit cadre de rigidification (5) étant disposé à ladite extrémité arrière de ladite partie antérieure (P1) et reliant ledit panneau externe (4) à ladite structure interne (3), ledit cadre de rigidification (5) comprenant un bord périphérique interne (51) lié à ladite structure interne (3) et un bord périphérique externe (52) lié directement ou par un anneau d'interface (8) audit panneau externe (4),
tel que ledit cadre de rigidification (5) présente une inclinaison par rapport à l'axe de révolution (A), de sorte que le cadre de rigidification (5) présente une pente orientée vers l'extrémité avant de ladite partie antérieure (P1) de nacelle, ledit cadre de rigidification (5) étant configuré pour dévier hors de la nacelle de l'ensemble propulsif un objet entrant par l'extrémité avant de la partie antérieure et percutant ledit cadre de rigidification (5), et **caractérisée en ce que** le bord périphérique externe (52) ou l'anneau d'interface (8) ne s'étend pas dans la continuité du cadre de rigidification (5) de sorte à faciliter l'évacuation hors de la nacelle d'un objet percutant le cadre de rigidification (5).

2. Partie antérieure (P1) de nacelle conforme à la revendication 1, comprenant une bride arrière (7) comportant une extrémité avant (71) et une extrémité arrière (72), ladite extrémité avant (71) étant fixée audit bord périphérique interne (51) dudit cadre de rigidification (5), ladite extrémité arrière (72) étant adaptée à être fixée à une bride moteur (6).

3. Partie antérieure (P1) de nacelle conforme à la revendication 2, dans laquelle la bride arrière (7) est déformable sous l'effet d'un impact de même direction que ledit axe de révolution (A) dudit cadre de rigidification (5).

4. Partie antérieure (P1) de nacelle conforme à l'une des revendications 2 ou 3, dans laquelle une pièce de fixation (9) en titane ou alliage de titane assure la liaison entre ladite extrémité avant (71) de ladite bride arrière (7) et ledit bord périphérique interne (51) dudit cadre de rigidification (5).

5. Partie antérieure (P1) de nacelle conforme à l'une quelconque des revendications précédentes, dans laquelle l'inclinaison du cadre de rigidification (5) par rapport à son axe de révolution (A) est comprise entre 10° et 45° et de préférence entre 20° et 40°, notamment 30°.

6. Partie antérieure (P1) de nacelle conforme à l'une quelconque des revendications précédentes, dans laquelle le cadre de rigidification (5) est réalisé en matériau composite.

7. Partie antérieure (P1) de nacelle conforme à l'une quelconque des revendications précédentes, dans laquelle le cadre de rigidification (5) présente une forme sensiblement bombée.

8. Partie antérieure (P1) de nacelle conforme à l'une quelconque des revendications précédentes dépourvue de cadre avant (2).

9. Partie antérieure (P1) de nacelle conforme à l'une quelconque des revendications précédentes, dans laquelle le cadre de rigidification (5) et l'anneau d'interface (8) forment un premier angle (β) supérieur ou égal à 120° et inférieur à 180°.

10. Partie antérieure (P1) de nacelle conforme à la revendication 9, dans laquelle le premier angle (β) est compris entre 120° et 170°.

11. Partie antérieure (P1) de nacelle conforme à l'une quelconque des revendications précédentes, dans laquelle l'anneau d'interface (8) présente une largeur (L) comprise entre 20 et 150 millimètres et de préférence comprise entre 60 et 80 millimètres, notamment 70 millimètres.

12. Partie antérieure (P1) de nacelle conforme à l'une quelconque des revendications précédentes, dans laquelle l'anneau d'interface (8) présente une épaisseur comprise entre 1 et 3 millimètres.

13. Partie antérieure (P1) de nacelle conforme à l'une quelconque des revendications précédentes, dans laquelle l'anneau d'interface (8) est réalisé en métal, notamment en aluminium, alliage d'aluminium ou en titane.

14. Ensemble propulsif d'aéronef comportant une nacelle, ladite nacelle comportant une partie antérieure (P1) conforme à l'une des revendications précédentes.

## Patentansprüche

1. Vorderteil (P1) einer Gondel einer Antriebsgruppe eines Luftfahrzeugs, wobei der Vorderteil (P1) ein vorderes Ende, das den Lufteinlass ermöglicht, und ein hinteres Ende aufweist, wobei der Vorderteil (P1) umfasst:
- eine Lufteinlasslippe (1), die am vorderen Ende angeordnet ist,
- eine innere Struktur (3), die eine Innenfläche (11) der Lufteinlasslippe (1) verlängert,
- ein äußeres Paneel (4), das eine Außenfläche (12) der Lufteinlasslippe (1) verlängert,
- einen um eine Drehachse (A) angeordneten ringförmigen Aussteifungsrahmen (5), wobei der Aussteifungsrahmen (5) am hinteren Ende des Vorderteils (P1) angeordnet ist und das äußere Paneel (4) mit der inneren Struktur (3) verbindet, wobei der Aussteifungsrahmen (5) einen inneren Umfangsrand (51), der mit der inneren Struktur (3) verbunden ist, und einen äußeren Umfangsrand (52), der direkt oder über einen Schnittstellenring (8) mit dem äußeren Paneel (4) verbunden ist, umfasst, derart, dass der Aussteifungsrahmen (5) eine Neigung in Bezug auf die Drehachse (A) aufweist, so dass der Aussteifungsrahmen (5) ein Gefälle zum vorderen Ende des Vorderteils (P1) der Gondel hin aufweist, wobei der Aussteifungsrahmen (5) dafür ausgelegt ist, ein Objekt, das über das vordere Ende des Vorderteils eintritt und auf den Aussteifungsrahmen (5) aufprallt, aus der Gondel der Antriebsgruppe hinaus abzulenken, und
**dadurch gekennzeichnet, dass** der äußere Umfangsrand (52) oder der Schnittstellenring (8) nicht sich an den Aussteifungsrahmen (5) anschließend erstreckt, um das Entfernen eines auf den Aussteifungsrahmen (5) aufprallenden Objekts aus der Gondel zu erleichtern.

2. Vorderteil (P1) einer Gondel nach Anspruch 1, welcher einen hinteren Flansch (7) umfasst, der ein vorderes Ende (71) und ein hinteres Ende (72) aufweist, wobei das vordere Ende (71) am inneren Umfangsrand (51) des Aussteifungsrahmens (5) befestigt ist, wobei das hintere Ende (72) dafür eingerichtet ist, an einem Motorflansch (6) befestigt zu werden.

3. Vorderteil (P1) einer Gondel nach Anspruch 2, wobei der hintere Flansch (7) unter der Wirkung eines Aufpralls in derselben Richtung wie die Drehachse (A) des Aussteifungsrahmens (5) verformbar ist.

4. Vorderteil (P1) einer Gondel nach einem der Ansprüche 2 oder 3, wobei ein Befestigungsteil (9) aus Titan oder Titanlegierung die Verbindung zwischen dem vorderen Ende (71) des hinteren Flansches (7) und dem inneren Umfangsrand (51) des Aussteifungsrahmens (5) sicherstellt.

5. Vorderteil (P1) einer Gondel nach einem der vorhergehenden Ansprüche, wobei die Neigung des Aussteifungsrahmens (5) in Bezug auf seine Drehachse (A) zwischen 10° und 45° und vorzugsweise zwischen 20° und 40°, insbesondere 30° beträgt.

6. Vorderteil (P1) einer Gondel nach einem der vorhergehenden Ansprüche, wobei der Aussteifungsrahmen (5) aus Verbundwerkstoff hergestellt ist.

7. Vorderteil (P1) einer Gondel nach einem der vorhergehenden Ansprüche, wobei der Aussteifungsrahmen (5) eine im Wesentlichen gewölbte Form aufweist.

8. Vorderteil (P1) einer Gondel nach einem der vorhergehenden Ansprüche, welcher nicht mit einem vorderen Rahmen (2) versehen ist.

9. Vorderteil (P1) einer Gondel nach einem der vorhergehenden Ansprüche, wobei der Aussteifungsrahmen (5) und der Schnittstellenring (8) einen ersten Winkel (β) bilden, der größer oder gleich 120° und kleiner als 180° ist.

10. Vorderteil (P1) einer Gondel nach Anspruch 9, wobei der erste Winkel (β) zwischen 120° und 170° liegt.

11. Vorderteil (P1) einer Gondel nach einem der vorhergehenden Ansprüche, wobei der Schnittstellenring (8) eine Breite (L) zwischen 20 und 150 Millimetern und vorzugsweise zwischen 60 und 80 Millimetern, insbesondere von 70 Millimetern aufweist.

12. Vorderteil (P1) einer Gondel nach einem der vorhergehenden Ansprüche, wobei der Schnittstellenring (8) eine Dicke zwischen 1 und 3 Millimetern aufweist.

13. Vorderteil (P1) einer Gondel nach einem der vorhergehenden Ansprüche, wobei der Schnittstellenring (8) aus Metall, insbesondere aus Aluminium, Aluminiumlegierung oder aus Titan hergestellt ist.

14. Antriebsgruppe eines Luftfahrzeugs, welche eine Gondel aufweist, wobei die Gondel einen Vorderteil (P1) nach einem der vorhergehenden Ansprüche aufweist.

## Claims

1. Anterior part (P1) of a nacelle of an aircraft propulsive assembly, said anterior part (P1) having a front end allowing the inlet of air and a rear end, said anterior part (P1) comprising:
- an air inlet lip (1) arranged at said front end,
- an inner structure (3) extending an inner surface (11) of the air inlet lip (1),
- an outer panel (4) extending an outer surface (12) of the air inlet lip (1),
- an annular rigidifying frame (5) around an axis of revolution (A), said rigidifying frame (5) being arranged at said rear end of said anterior part (P1) and linking said outer panel (4) to said inner structure (3), said rigidifying frame (5) comprising an inner peripheral edge (51) linked to said inner structure (3) and an outer peripheral edge (52) linked directly or by an interface ring (8) to said outer panel (4),
such that said rigidifying frame (5) has an inclination relative to the axis of revolution (A), such that the rigidifying frame (5) has a slope oriented towards the front end of said anterior part (P1) of the nacelle, said rigidifying frame (5) being configured to deflect out of the nacelle of the propulsive assembly an object entering through the front end of the anterior part and striking said rigidifying frame (5), and **characterised in that** the outer peripheral edge (52) or the interface ring (8) does not extend in the continuity of the rigidifying frame (5) so as to facilitate the evacuation out of the nacelle of an object striking the rigidifying frame (5).

2. Anterior part (P1) of a nacelle according to Claim 1, comprising a rear flange (7) comprising a front end (71) and a rear end (72), said front end (71) being fixed to said inner peripheral edge (51) of said rigidifying frame (5), said rear end (72) being adapted to be fixed to an engine flange (6).

3. Anterior part (P1) of a nacelle according to Claim 2, wherein the rear flange (7) is deformable under the effect of an impact of the same direction as said axis of revolution (A) of said rigidifying frame (5).

4. Anterior part (P1) of a nacelle according to either of Claims 2 and 3, wherein a fixing part (9) made of titanium or titanium alloy ensures the link between said front end (71) of said rear flange (7) and said inner peripheral edge (51) of said rigidifying frame (5).

5. Anterior part (P1) of a nacelle according to any one of the preceding claims, wherein the inclination of the rigidifying frame (5) relative to its axis of revolution (A) lies between 10° and 45° and preferably between 20° and 40°, in particular 30°.

6. Anterior part (P1) of a nacelle according to any one of the preceding claims, wherein the rigidifying frame (5) is produced in composite material.

7. Anterior part (P1) of a nacelle according to any one of the preceding claims, wherein the rigidifying frame (5) has a substantially domed form.

8. Anterior part (P1) of a nacelle according to any one of the preceding claims, without a front frame (2).

9. Anterior part (P1) of a nacelle according to any one of the preceding claims, wherein the rigidifying frame (5) and the interface ring (8) form a first angle (β) greater than or equal to 120° and less than 180°.

10. Anterior part (P1) of a nacelle according to Claim 9, wherein the first angle (β) lies between 120° and 170°.

11. Anterior part (P1) of a nacelle according to any one of the preceding claims, wherein the interface ring (8) has a width (L) lying between 20 and 150 millimetres and preferably lying between 60 and 80 millimetres, notably 70 millimetres.

12. Anterior part (P1) of a nacelle according to any one of the preceding claims, wherein the interface ring (8) has a thickness lying between 1 and 3 millimetres.

13. Anterior part (P1) of a nacelle according to any one of the preceding claims, wherein the interface ring (8) is produced in metal, notably aluminium, an aluminium alloy or titanium.

14. Aircraft propulsive assembly comprising a nacelle, said nacelle comprising an anterior part (P1) according to one of the preceding claims.
